# EUROPEAN PATENT SPECIFICATION

(11) **EP 1 515 014 B1**
(45) Date of publication and mention of the grant of the patent: **21.02.2007**
(21) Application number: 04021630.1
(22) Date of filing: 10.09.2004
(51) Int. Cl.: F01N 3/08, F01N 3/20, F02D 41/02, F02D 41/40

(54) **Exhaust purifying apparatus of internal combustion engine**
Vorrichtung zur Abgasreinigung einer Brennkraftmaschine
Dispositif de purification des gaz d'échappement d'un moteur à combustion interne

(30) Priority: 11.09.2003 JP 2003320030
(43) Date of publication of application: 16.03.2005
(73) Proprietor: Toyota Jidosha Kabushiki Kaisha, Toyota-shi, Aichi 471-8571 (JP); DENSO CORPORATION, Kariya-shi, Aichi-ken, 448-8661 (JP)
(72) Inventor: Matsuno, Shigehiro, Toyota-shi Aichi-ken 471-8571 (JP); Kobayashi, Nobuki, Toyota-shi Aichi-ken 471-8571 (JP); Inaba, Takayoshi, Kariya-shi Aichi-ken 448-8661 (JP)
(74) Representative: Kuhnen & Wacker

(56) References cited:
- EP-A- 0 831 226
- EP-A- 0 838 579
- EP-A- 1 245 813
- US-A- 6 164 064
- PATENT ABSTRACTS OF JAPAN vol. 2002, no. 08, 5 August 2002 (2002-08-05) & JP 2002 122019 A (TOYOTA MOTOR CORP), 26 April 2002 (2002-04-26)

## Description

The present invention relates to an exhaust purifying apparatus of an internal combustion engine having an storage reduction catalyst that occludes substances in exhaust gas when the air-fuel ratio of the exhaust gas is relatively lean, and reduces and emits the substances when the air-fuel ratio is relatively rich.

In this specification, the air-fuel ratio of exhaust gas refers to the ratio of an oxidizing component (oxygen and the like) and a reductant (hydrocarbon and the like) in exhaust gas.

A vehicle internal combustion engine, particularly, an internal combustion engine that performs lean combustion such as a diesel engine, generally has a NOx storage reduction catalyst that purifies nitrogen oxides (NOx) contained in exhaust gas. The NOx storage reduction catalyst occludes NOx when the air-fuel ratio of the exhaust gas is lean, and reduces and emits the stored occluded NOx when the air-fuel ratio is rich.

Incidentally, fuel and lubricating oil of an internal combustion engine contain sulfur. When sulfur oxides (SOx) produced from sulfur collect on the NOx storage reduction catalyst, the NOx purifying performance of the NOx storage reduction catalyst is possibly degraded.

Therefore, an exhaust purifying apparatus having a NOx storage reduction catalyst normally performs poisoning elimination. That is, when substances that possibly degrade the purifying performance of the NOx storage reduction catalyst, for example SOx, or poisoning substances are occluded by the NOx storage reduction catalyst, the poisoning substances are eliminated to restore the purifying performance. In the poisoning elimination, for example, the NOx storage reduction catalyst is heated to a predetermined temperature, and a reducing agent such as hydrocarbon (HC) and carbon monoxide (CO) is supplied to the NOx storage reduction catalyst. The supplied reducing agent reduces the SOx occluded by the NOx storage reduction catalyst. The SOx is then emitted from the NOx storage reduction catalyst.

However, if an excessive amount of reducing agent is supplied during a poisoning elimination, the temperature of the NOx storage reduction catalyst is excessively increased, which degrades the purifying performance of the NOx storage reduction catalyst. Accordingly, Japanese Laid-Open Patent Publication No. 2002-122019 discloses an exhaust purifying apparatus that estimates the temperature of a NOx storage reduction catalyst based on the running state of an internal combustion engine. Based on the estimated temperature, the apparatus controls the amount of the reducing agent, thereby controlling the temperature of the NOx storage reduction catalyst to a temperature suitable for poisoning elimination.

Another exhaust gas purification device for an engine is known from the European patent application EP 0 838 579 A2. Said device comprises a catalyst arranged in the exhaust passage for purifying NOₓ with a reducing agent. A purification ration of the NOₓ by said catalyst becomes more than a predetermined ratio when a temperature of said catalyst is within a predetermined temperature range. A predetermined amount of the reducing agent is fed to the catalyst. The amount of the reducing agent to be fed is determined on the basis of the catalyst temperature. Especially, the amount of the reducing agent to be fed is increased with respect to the predetermined amount when a temperature of an upstream end of the catalyst is lower than a lowest value of the predetermined temperature range and a temperature of a downstream end of the catalyst is higher than the lowest value.

Further, document EP 0 831 226 A2 discloses a fuel injection control device for a direct injection type engine having an exhaust passage and a NOₓ catalyst arranged therein to purify NOₓ in the exhaust gas. There, an injection operation of fuel injectors is controlled to carry out a main fuel injection at the latest at the beginning of a power stroke of the engine. The injecting operation at one of a power stroke and an exhaust stroke of the engine after the main fuel injection is completed to increase an amount of hydrocarbon in the exhaust gas. The injecting operation of the fuel injectors is controlled to carry out an additional sub fuel injection after the main fuel injection is completed and before the sub fuel injection is carried out.

Among internal combustion engines, particularly diesel engines are desired to reduce the emission of particulate matter (PM) contained in exhaust gas to the atmosphere. Therefore, an exhaust purifying apparatus of such an internal combustion engine typically has an exhaust filter for trapping PM contained in exhaust gas.

However, when the above described poisoning elimination is performed after an exhaust filter has trapped PM, combustion of PM trapped by the exhaust filter causes an unexpected increase in the temperature, which possibly results in an excessive increase in the temperature of the NOx storage reduction catalyst and the exhaust filter. That is, even if the amount of supplied reducing agent is controlled based on the estimated temperature that is related to the NOx storage reduction catalyst, an unexpected temperature increase of PM trapped by the exhaust filter may cause the temperature of the NOx storage reduction catalyst to be excessively increased.

If a great amount of unburned fuel is supplied when the catalyst is not sufficiently activated, a large portion of the unburned fuel is not oxidized and remains on the catalyst. In the case where unburned fuel collects on the NOx storage reduction catalyst or on the exhaust filter, fuel supply is likely to excessively increase the temperature of the catalyst.

Accordingly, it is an objective of the present invention to reduce substances occluded by an storage reduction catalyst in an appropriate manner in an exhaust purifying apparatus of an internal combustion engine having the storage reduction catalyst, which catalyst occludes substances in exhaust gas when the air-fuel ratio of the exhaust gas is relatively lean, and reduces and emits the substances when the air-fuel ratio is relatively rich.

Means for achieving the above objectives and advantages of the present invention will be now discussed.

A first invention provides an exhaust purifying apparatus of an internal combustion engine having an storage reduction catalyst that occludes substances in exhaust gas when the air-fuel ratio of exhaust gas is relatively lean, and reduces and emits the substances when the air-fuel ratio is relatively rich. After starting to supply reducing agent from a section upstream of the storage reduction catalyst to reduce the poisoning substance occluded by the storage reduction catalyst and to discharge the substance from the storage reduction catalyst, the apparatus temporarily stops supplying the reducing agent and monitors a degree of increase in the temperature of an exhaust system due to the start of supplying the reducing agent, wherein the supply of the reducing agent is stopped after an initial addition of the reducing agent. Based on the monitoring result, the apparatus resumes supplying the reducing agent.

In the above configuration, after starting to supply reducing agent, the apparatus temporarily stops supplying the reducing agent and monitors a degree of increase in the temperature of the exhaust system due to the start of supplying the reducing agent. Based on the monitoring result, the apparatus resumes supplying the reducing agent. By monitoring the degree of increase of the temperature, the possibility is properly determined whether the temperature of the exhaust system will be excessively increased by combustion of particulate matter and unburned fuel that exist in the exhaust system due to supply of the reducing agent. Then, if the supply of the reducing agent is resumed on condition that there is no possibility that the temperature of the exhaust system will be excessively increased, the temperature of the exhaust system is favorably prevented from being excessively increased. Therefore, the above configuration substances occluded by the storage reduction catalyst is reduced in an appropriate manner.

A second invention provides an exhaust purifying apparatus of an internal combustion engine having an storage reduction catalyst that occludes substances in exhaust gas when the air-fuel ratio of exhaust gas is relatively lean, and reduces and emits the substances when the air-fuel ratio is relatively rich. When supplying the reducing agent from a section upstream of the storage reduction catalyst to reduce a substance occluded by the storage reduction catalyst and to discharge the substance to a downstream side of the engine, the apparatus monitors a degree of increase in the temperature of an exhaust system due to the start of supplying the reducing agent. Based on the monitoring result, the apparatus sets up the manner in which the reducing agent is supplied subsequently.

In the above configuration, the apparatus temporarily monitors a degree of increase in the temperature of the exhaust system due to the start of supplying the reducing agent. Based on the monitoring result, the apparatus sets up the manner in which the reducing agent is supplied subsequently. By monitoring the degree of increase of the temperature, the possibility is properly determined whether the temperature of the exhaust system will be excessively increased by combustion of particulate matter and unburned fuel that exist in the exhaust system due to supply of the reducing agent. By setting up the manner in which the reducing agent is supplied subsequently according to the possibility whether the temperature of the exhaust system will be excessively increased due to supply of the reducing agent, the temperature of the exhaust system is favorably prevented from being excessively increased by the supply of the reducing agent. Therefore, the above configuration substances occluded by the storage reduction catalyst is reduced in an appropriate manner.

It is preferably configured that the supply of the reducing agent is performed intermittently, and that, when the degree of increase in the temperature of the exhaust system due to the start of supplying the reducing agent is no more than a predetermined threshold value, the apparatus increases the amount of the supplied reducing agent in each supply.

In this case, if the degree of increase of the temperature of the exhaust system due to the start of supply of the reducing agent is no more than the threshold value, it is possible to determine that there is no longer the possibility that combustion of particulate matter and unburned fuel in the exhaust system will excessively increase the temperature of the exhaust system. When there is no possibility that the temperature of the exhaust system will be excessively increased, the amount of the supplied reducing agent in each supply is increased. This expedites the reduction of the substance occluded by the storage reduction catalyst and discharge of the reduced substance to the downstream side of the engine.

Further, in the above configuration, the amount of the supplied reducing agent at the start of supply is less than the amount of the supplied reducing agent in a state where the temperature of the exhaust system will not be excessively increased. Therefore, even if the state at the start of supply is the one described above, the temperature of the exhaust system is favorably prevented from being increased. Further, if the supply of the reducing agent is resumed when the degree of increase of the temperature of the exhaust system due to the start of supply of the reducing agent becomes equal to or less than the predetermined threshold value, reducing the amount of supply at the start of the supply of the reducing agent advances the timing at which the supply of the reducing agent is resumed.

It is preferably configured that the supply of the reducing agent is performed intermittently, and that, when the temperature of the exhaust system increases, the apparatus reduces the amount of the supplied reducing agent in each supply.

When the supply of the reducing agent is intermittently performed, the temperature of the exhaust system repeatedly increases and decreases. Specifically, the temperature of the exhaust system increases when the reducing agent is supplied, and decreases when the supply of the reducing agent is temporarily suspended. Nevertheless, the average value of the exhaust system temperature, which increases and decreases, has a tendency to increase. Accordingly, the continuation of the intermittent supply of the reducing agent causes the maximum value of the exhaust system temperature to increase. In this respect, by reducing the amount of the supplied reducing agent per supply as the exhaust system temperature increases, the increase of the maximum value of the exhaust system temperature is favorably limited.

Further, the fluctuations of the exhaust system temperature is reduced compared to a case where the period between the supplies of the reducing agent is extended as the exhaust system temperature increase.

It is preferably configured that, when the temperature of the exhaust system surpasses a predetermined temperature due to the supply of the reducing agent, the apparatus prohibits the supply of the reducing agent until the temperature of the exhaust system decreases by an amount no less than a predetermined amount.

Under the state where the exhaust system temperature will exceed a predetermined temperature due to the supply of the reducing agent, an additional supply of the reducing agent possibly excessively increase the exhaust system temperature.

However, by prohibiting the supply of the reducing agent until the exhaust system temperature is decreased to an amount no less than a predetermined amount, the exhaust system temperature is favorably prevented from being excessively increased.

It is preferably configured that the supply of the reducing agent is performed when a count value of a counter that is periodically and repeatedly incremented and decremented is incremented, and that, when the supply of the reducing agent is prohibited, the apparatus prohibits the count value of the counter from being incremented and decrements the count value to an initial value.

If the supply of the reducing agent is performed when the count value of the counter is incremented, the following disadvantages may be caused. That is, if the counter value is being decremented when the current condition is not a predetermined condition under which the supply of the reducing agent is prohibited, the supply of the reducing agent cannot be performed despite the current condition not being the predetermined condition.

In contrast to this, when the current condition is the predetermined condition under which the supply of the reducing agent is prohibited, increment of the count value of the counter is prohibited, and the count value is decremented to the initial value. The disadvantage is thus eliminated.

It is preferably configured that the substance that is occluded by the storage reduction catalyst and emitted to the downstream side of the engine by the supply of the reducing agent is sulfur oxide.

It is preferably configured that the apparatus includes a filter for trapping particulate matter in the exhaust gas.

It is preferably configured that the supply of reducing agent is performed intermittently, and that, after starting to supply the reducing agent, the apparatus reduces the amount of the supplied reducing agent in the initial supply compared to the amount of the supplied reducing agent in the second and subsequent supplies.

A third invention provides an exhaust purifying apparatus of an internal combustion engine having an storage reduction catalyst that occludes substances in exhaust gas when the air-fuel ratio of exhaust gas is relatively lean, and reduces and emits the substances when the air-fuel ratio is relatively rich. The apparatus intermittently supplies reducing agent from a section upstream of the storage reduction catalyst to reduce a substance occluded by the storage reduction catalyst and to discharge the substance to a downstream side of the engine. After starting to supply the reducing agent, the apparatus reduces the amount of the supplied reducing agent in the initial supply compared to the amount of the supplied reducing agent in the second and subsequent supplies.

Even if the degree of increase of the exhaust system temperature is monitored after the supply of the reducing agent is started, an abrupt increase of the catalyst temperature due to combustion of particulate matter and unburned fuel in the catalyst cannot be avoided at the initial supply of the reducing agent after the supply of the reducing agent is started. In this respect, with the amount of the supplied reducing agent being reduced at the initial supply after the supply of the reducing agent is started, the catalyst temperature is prevented from being excessively increased at the initial supply of the reducing agent even if particulate matter and unburned fuel exit in the catalyst.
Fig. 1 is a diagram illustrating an exhaust purifying apparatus of an internal combustion engine according to a first embodiment of the present invention;
Fig. 2 is a time chart showing S release control ((a) requirements for performing S poisoning elimination, (b) actual air-fuel ratio, (c) addition suspension flag, (d) counter value, (e) detected value of exhaust temperature sensor);
Fig. 3 is a flowchart.showing S release control;
Fig. 4 is a flowchart showing S release control;
Fig. 5 is a time chart showing S release control in an exhaust purifying apparatus of an internal combustion engine according to a second embodiment ((a) requirements for performing S poisoning elimination, (b) actual air-fuel ratio, (c) addition suspension flag, (d) counter value, (e) detected value of exhaust temperature sensor); and
Fig. 6 is a time chart showing S release control in an exhaust purifying apparatus of an internal combustion engine according to a third embodiment ((a) requirements for performing S poisoning elimination, (b) actual air-fuel ratio, (c) addition suspension flag, (d) counter value, (e) detected value of exhaust temperature sensor).

### (First Embodiment)

Hereinafter, an exhaust purifying apparatus of an internal combustion engine according to a first embodiment of the present invention will be described. The apparatus of the first embodiment is applied to a diesel engine 2.

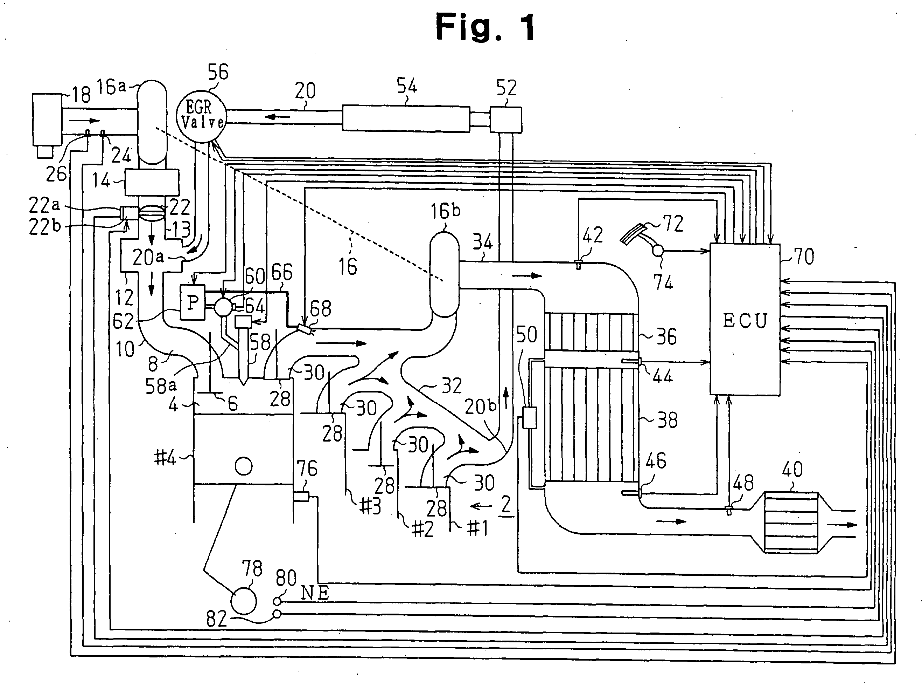

Fig. 1 is a block diagram showing the exhaust purifying apparatus of the diesel engine 2 according to this embodiment. The diesel engine 2 has cylinders. In this embodiment, the number of the cylinders is four, and the cylinders are denoted as #1, #2, #3, and #4. A combustion chamber 4 of each of the cylinders #1 to #4 includes an intake port 8, which is opened and closed by an intake valve 6. The combustion chambers 4 are connected to a surge tank 12 via the intake ports 8 and an intake manifold 10. The surge tank 12 is connected to an intercooler 14 and an outlet of a supercharger with an intake passage 13. In this embodiment, the supercharger is a compressor 16a of an exhaust turbocharger 16. An inlet of the compressor 16a is connected to an air cleaner 18. An EGR gas supply port 20a of an exhaust gas recirculation (EGR) passage 20 opens to the surge tank 12. A throttle valve 22 is located in a section of the intake passage 13 between the surge tank 12 and the intercooler 14. An intake flow rate sensor 24 and an intake temperature sensor 26 are located in a section between the compressor 16a and the air cleaner 18.

The combustion chamber 4 of each of the cylinders #1 to #4 includes an exhaust port 30, which is opened and closed by an exhaust valve 28. The combustion chambers 4 are connected to an inlet of an exhaust turbine 16b via the exhaust ports 30 and an exhaust manifold 32. An outlet of the exhaust turbine 16b is connected to an exhaust passage 34. The exhaust turbine 16b draws exhaust gas from a section of the exhaust manifold 32 that corresponds to the side of the fourth cylinder #4.

Three catalysts for purifying exhaust gas are provided in the exhaust passage 34. A NOx storage reduction catalyst 36 is located at the most upstream section. When exhaust gas is regarded as an oxidizing atmosphere (lean) during a normal operation of the diesel engine 2, the NOx storage reduction catalyst 36 occludes NOx. When the exhaust gas is regarded as a reducing atmosphere (stoichiometric or rich), the NOx storage reduction catalyst reduces reduced NOx with HC and CO. NOx is purified in this manner.

An exhaust filter 38 is located in an intermediate section. The exhaust filter 38 has a monolithic wall. The wall has pores through which exhaust gas passes. The surface of the exhaust filter 33 is coated with NOx storage reduction catalyst. Therefore, NOx is purified as described above. Further, the surface of the exhaust filter 33 traps particulate matter (PM: particulates) in exhaust gas. Thus, when exhaust gas is regarded as an oxidizing atmosphere, active oxygen generated when the NOx is occluded starts oxidizing PM. Also, ambient excessive oxygen oxidizes the entire PM. When exhaust gas is regarded as a reducing atmosphere (stoichiometric or rich), a large amount of active oxygen generated by the NOx storage reduction catalyst promotes oxidation of the PM. Accordingly, not only NOx, but also PM is purified.

An oxidation catalyst 40 is located in the most downstream section. The oxidation catalyst 40 oxidizes and purifies HC and CO. A first air-fuel ratio sensor 42 is located upstream of the NOx storage reduction catalyst 36. A first exhaust temperature sensor 44 is located between the NOx storage reduction catalyst 36 and the exhaust filter 38. A second exhaust temperature sensor 46 and a second air-fuel ratio sensor 48 are located between the exhaust filter 38 and the oxidation catalyst 40. The second exhaust temperature sensor 46 is closer to the exhaust filter 38 than the oxidation catalyst 40. The second air-fuel ratio sensor 48 is locate closer to the oxidation catalyst 40 than the exhaust filter 38.

The first air-fuel ratio sensor 42 and the second air-fuel ratio sensor 48 each detect the air-fuel ratio of exhaust gas at the respective positions based on components of the exhaust gas. The first and second air-fuel ratio sensors 42, 48 each outputs electric signal in proportion to the detected air-fuel ratio. The first exhaust temperature sensor 44 and the second exhaust temperature sensor 46 each detect the temperature of exhaust gas at the respective positions.

Pipes of a differential pressure sensor 50 are connected to a section upstream of the exhaust filter 38 and a section downstream of the exhaust filter 38. The differential pressure sensor 50 detects clogging in the exhaust filter 38 based on the difference between the pressure in the section upstream of the exhaust filter 38 and the section downstream of the exhaust filter 38.

An EGR gas intake port 20b of the EGR passage 20 is provided in the exhaust manifold 32. The EGR gas intake port 20b is open at a section that corresponds to the side of the first cylinder #1, which is opposite to the side of the fourth cylinder #4, at which the exhaust turbine 16b introduces exhaust gas.

An iron based EGR catalyst 52 is located in the EGR passage 20. The iron based EGR catalyst 52 reforms EGR gas from the EGR gas intake port 20b of the EGR passage 20. Also, an EGR cooler 54 for cooling EGR gas is located in the EGR passage 20. The iron based EGR catalyst 52 also functions to prevent clogging of the EGR cooler 54. An EGR valve 56 is located in the vicinity of the EGR gas supply port 20a. The opening degree of the EGR valve 56 is changed to adjust the amount of EGR gas supplied from the EGR gas supply port 20a to the intake system.

Each of the cylinders #1 to #4 is provided with a fuel injection valve 58 that directly injects fuel into the corresponding combustion chamber 4. The fuel injection valves 58 are connected to a common rail 60 with fuel supply pipes 58a. A variable displacement pump 62, which is electrically controlled, supplies fuel to the common rail 60. High pressure fuel supplied from the pump 62 to the common rail 60 is distributed to the fuel injection valves 58 through the fuel supply pipes 58a. A fuel pressure sensor 64 for detecting the pressure of fuel is attached to the common rail 60.

Further, the pump 62 also supplies low pressure fuel to an fuel adding valve 68 through a fuel supply pipe 66. The fuel adding valve 68 is provided in the exhaust port 30 of the fourth cylinder #4 and injects fuel as a reducing agent to the exhaust turbine 16b.

An electronic control unit (ECU) 70 is mainly composed of a digital computer having a CPU, a ROM, and a RAM, and drive circuits for driving other devices. The ECU 70 reads signals from the intake flow rate sensor 24, the intake temperature sensor 26, the first air-fuel ratio sensor 42, the first exhaust temperature sensor 44, the second exhaust temperature sensor 46, the second air-fuel ratio sensor 48, the differential pressure sensor 50, the fuel pressure sensor 64, and the throttle opening sensor 22a. Further, the ECU 70 reads signals from an acceleration pedal sensor 74 that detects the depression degree of an acceleration pedal 72, and a coolant temperature sensor 76 that detects the temperature of coolant of the diesel engine 2. Also, the ECU 70 reads signals from an engine speed sensor 80 that detects the rotation speed of a crankshaft 78, and a cylinder distinguishing sensor 82 that distinguishes cylinders by detecting the rotation phase of the crankshaft 78 or the rotation phase of the intake cams.

Based on the operation state of the engine obtained from these signals, the ECU 70 controls fuel injection timing and the amount of fuel injection. The ECU 70 also controls the opening degree of the EGR valve 56, and controls the throttle opening with the motor 22b and performs processes for detecting the state of the catalysts. For example, in an EGR control, a throttle opening degree TA and an EGR opening degree (the opening degree of the EGR valve 56) are adjusted such that the EGR ratio seeks a target EGR ratio, which is set based on the engine.load (or fuel injection amount) and an engine speed NE. Further, an intake air flow rate feedback control is performed in which the EGR opening degree is adjusted such that the intake flow rate seeks a target intake air flow rate (target value per rotation of the engine 2), which is set based on the engine load (or the fuel injection amount) and the engine speed NE. Combustion modes accompanying the EGR control include two modes, that is, a normal combustion mode and a low temperature combustion mode. The low temperature combustion mode refers to a combustion mode in which a large amount of EGR gas is introduced to slow down the increase of the combustion temperature, thereby simultaneously reducing NOx and smoke. In this embodiment, the low temperature mode is executed in a low load middle-to-high rotation speed region. The other combustion mode is the normal combustion mode, in which a normal EGR control (including a case where no EGR is executed) is performed.

The ECU 70 performs four catalyst control modes, which are modes for controlling the catalysts. The catalyst control modes include a PM regeneration control mode, a sulfur release control mode (S release control mode), a NOx reduction control mode, and a normal control mode.

The PM regeneration mode is executed for combusting PM trapped by the exhaust filter 38 and discharging the PM as carbon dioxide (CO₂) and water (H₂O). In the PM regeneration control, the fuel adding valve continuously adds fuel to exhaust gas, thereby oxidizing the added fuel in the exhaust gas and on the exhaust filter 38. The heat generated by the oxidization is used to increase the temperature in the vicinity of the exhaust filter 38 (for example, to 600°C to 700°C). Accordingly, the PM is burned.

The NOx reduction control is executed for reducing the NOx occluded by the NOx storage reduction catalyst 36 and the NOx storage reduction catalyst coated on the exhaust filter 38 to nitrogen (N₂), carbon dioxide (CO₂), and water (H₂O). During the NOx reduction control, the fuel adding valve 68 intermittently adds fuel to exhaust gas at a certain interval so that the exhaust gas about the NOx catalyst is temporarily low in oxygen concentration and contains a large amount of unburned fuel component. In other words, rich spike is intermittently executed. This promotes release of NOx from the NOx catalyst and reduction of NOx. That is, NOx is reduced and purified.

Together with NOx, sulfur oxides (SOx) is occluded by the NOx storage reduction catalyst 36 and the NOx storage reduction catalyst coated on the exhaust filter 38. The occluded SOx degrade the NOx occlusion performance of the catalyst. The S release control is executed for restoring the degraded NOx occlusion performance. When the S release control is started, the fuel adding valve 68 continuously adds fuel to exhaust gas as in the PM regeneration control, thereby increasing the temperature in the vicinity of the exhaust filter 38 (for example, to a temperature in a range from 600°C to 700°C). Thereafter, as in the NOx reduction control, the fuel adding valve 68 intermittently adds fuel to exhaust gas for performing rich spike. This promotes release of SOx from the catalysts and reduction of the SOx. Accordingly, the NOx occlusion performance is restored. In this embodiment, the temperature increase is continued until the PM trapped by the exhaust filter 38 is substantially completely purified. Therefore, the combustion of PM is not performed simultaneously with the reduction of SOx. Accordingly, the temperature in the vicinity of the catalyst is prevented from excessively increased.

The normal control is a control mode other than the above three control modes. In the normal control, the fuel adding valve 68 does not add fuel to exhaust gas.

The S release control will now be described in detail.

In this embodiment, when the fuel adding valve 68 intermittently adds fuel to exhaust gas during the S release control, a degree of increase of the detected value of the exhaust temperature due to addition of fuel is monitored after the initial addition of fuel. Based on the results of monitoring, whether the second and subsequent additions of fuel need to be performed is determined. This is because, when rich spike is performed as the S release control, if PM is not completely removed by the temperature increase prior to the rich spike, the temperature in the vicinity of the exhaust filter 38 may excessively increase. That is, by monitoring the degree of increase of the temperature due to the initial addition of fuel, the possibility is properly determined whether combustion of PM trapped by the exhaust filter 38 due to addition of fuel will excessively increase the temperature in the vicinity of the exhaust filter 38. Then, the addition of fuel is resumed on condition that there is no possibility that the temperature in the vicinity of the exhaust filter 38 will be excessively increased. This prevents the temperature in the vicinity of the exhaust filter 38 from being excessively increased.

Further, the amount of added fuel in the second and subsequent additions is increased compared to the amount of added fuel in the initial fuel addition. Increasing the amount of added fuel in the second and subsequent fuel additions compared to that in the initial fuel addition promotes reduction of substances occluded by the exhaust filter 38 and emission of the substances to the downstream side. Also, in this embodiment, the amount of added fuel in the initial fuel addition is less than that in each of the second and subsequent fuel addition. Therefore, even if PM exists in the exhaust filter 38 at the time of the initial fuel addition and there is a possibility that the temperature in the vicinity of the exhaust filter 38 will be excessively increased, increase of the temperature of the exhaust filter 38 is limited. Further, since the amount of added fuel is small in the initial fuel addition, the fuel addition can be quickly resumed after the initial fuel addition. Therefore, when there is no PM in the exhaust filter 38, S poisoning is quickly eliminated.

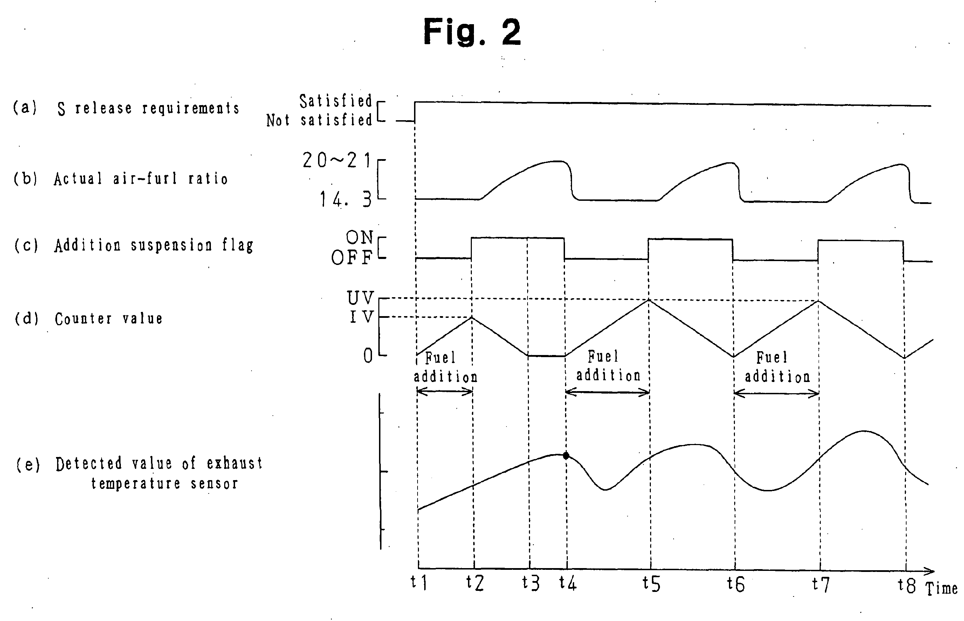

Hereinafter, specific procedure of the S release control will be described with reference to Figs. 2 to 4.

Fig. 2 is a time chart showing the S release control. Section (a) of Fig. 2 shows whether requirements for performing S release control are satisfied. Section (b) shows the actual air-fuel ratio in the exhaust passage 34. Section (c) of Fig. 2 shows the state of an addition suspension flag, which is turned on when no fuel addition is performed by the fuel adding valve 68. Section (d) of Fig. 2 shows a counter value that is repeatedly incremented and decremented. Increment of the counter value corresponds to fuel addition by the fuel adding valve 68. Section (e) of Fig. 2 represents detected value of the first exhaust temperature sensor 44 or the second exhaust temperature sensor 46.

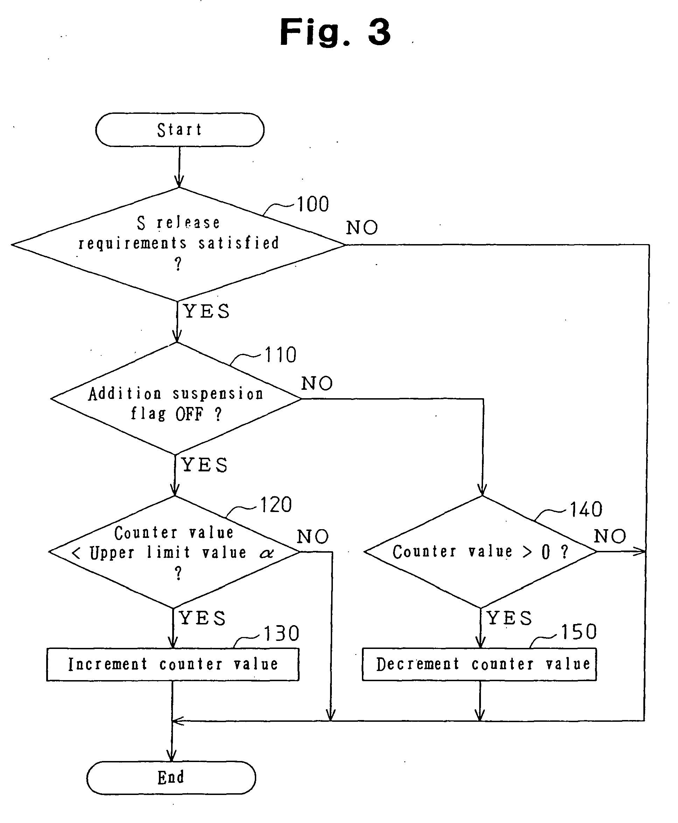

In Fig. 2, in each of the periods from time t1 to time t2, from time t4 to time t5, and from time t6 to time t7, the counter value is incremented. That is, in these periods, addition of fuel is performed by the fuel adding valve 68. The rate of increment of the counter value is not necessarily equal to the rate of decrement of the counter value. The rates are adjusted as necessary according to the operation state of the diesel engine 2 (for example, the fuel injection amount and the engine speed). The counter is operated by the ECU 70 at a predetermined interval. The operation of the counter corresponds to the processes shown in Fig. 3.

In a series of processes shown in Fig. 3, the ECU 70 judges whether requirements for performing the S release control are satisfied at step 100. The requirements, for example, include the following ones.
(i) Now is the time for performing the S poisoning elimination. The determination is made, for example, by computing the integrated value of the amount of fuel injection from when the previous S release control was completed to the present, and judging whether the integrated value is greater than a predetermined value.
(ii) With the requirement (i) being satisfied, a temperature rising control for increasing the temperature in the vicinity of the exhaust filter 38 (for example, to 600°C to 700°C) is completed. In this embodiment, the detected values of the first exhaust temperature sensor 44 and the second exhaust temperature sensor 46 are used as the temperature in the vicinity of the exhaust filter 38.
(iii) In the case where the S release control has been started, it is determined that a sufficient period for reducing SOx has not elapsed.

If these requirements are satisfied, the ECU 70 judges whether the addition suspension flag shown in Fig. 2 is OFF at step 110. If the addition suspension flag is off, the ECU 70 proceeds to step 120. At step 120, the ECU 70 judges whether the counter value shown in Fig. 2 is less than a predetermined upper limit value α shown in Fig.2. If the counter value is less than the upper limit value α, the ECU 70 increments the counter value in step 130. If the addition suspension flag is not OFF at step 110, the ECU 70 proceeds to step 140. At step 140, the ECU 70 judges whether the counter value is greater than zero. If the counter value is greater than zero, the ECU 70 decrements the counter value at step 150. The procedure is temporarily suspended if the requirements for the S release control are not satisfied at step 100, if the counter value is not less than the upper limit value α, if the counter value is not greater than zero at step 140, or if the process of step 130 or step 150 is terminated.

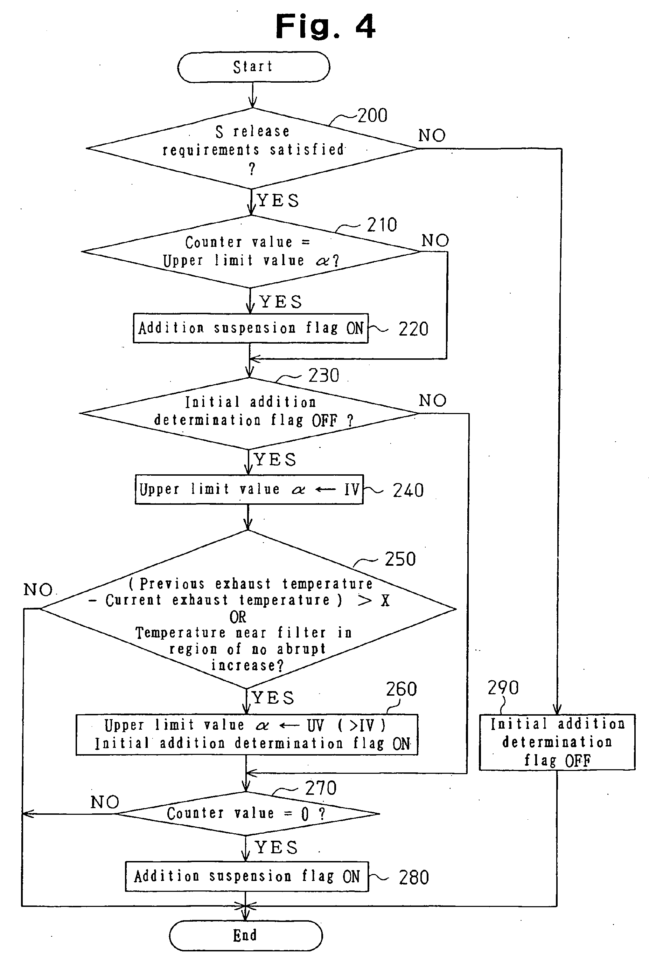

The procedure for setting of the upper limit value of the counter and for setting the addition suspension flag will now be described with reference to Fig. 4. The procedure shown in Fig. 4 is executed by the ECU 70 at a predetermined interval.

In this series of processes, the ECU 70 judges whether the requirements for performing the S release control are satisfied at step 200, as at step 100 of Fig 3. If the requirements are satisfied at step 200, the ECU 70 judges whether the counter value has reached the upper limit value α. If the counter value has reached the upper limit value α, the ECU 70 turns the addition suspension flag ON (time t2, time t5, and time t7 in Fig. 2).

If the counter value has not reached the upper limit value α at step 210, or after step 220 is executed, the ECU 70 proceeds to step 230. In step 230, the ECU 70 judges whether an initial addition determination flag is OFF. This flag is turned ON when the initial fuel addition is being performed as rich spike control for the S poisoning elimination. That is, at step 230, the ECU 70 judges whether the initial fuel addition has been performed since the requirements for the S release control were satisfied.

When the initial addition determination flag is OFF at step 230, the ECU sets the upper limit value α of the counter value to an initial value IV at step 240. That is, the upper limit value α is set to the initial value IV so that the amount of the initial fuel addition is less than the amount of fuel addition in the second and subsequent fuel additions.

In step 250, the ECU 70 monitors the degree of increase in detected values of the first exhaust temperature sensor 44 and the second exhaust temperature sensor 46. That is, the ECU 70 determines whether the logical OR of a condition (a) and a condition (b) is true, in which the condition (a) is that the difference between the current detected value and the previously detected value of the first exhaust temperature sensor 44 is greater than a predetermined value X and the condition (b) is that the current detected value is in a region that does not cause the temperature in the vicinity of the exhaust filter 38 to be abruptly increased. Also, the ECU 70 determines whether the logical OR of a condition (a') and a condition (b') is true, in which the condition (a') is that the difference between the current detected value and the previously detected value of the second exhaust temperature sensor 46 is greater than the predetermined value X and the condition (b') is that the current detected value is in a region that does not cause the temperature in the vicinity of the exhaust filter 38 to be abruptly increased. The predetermined value X is used for determine a degree of increase in the detected value, which degree does not cause the temperature in the vicinity of the exhaust filter 38 to be abruptly increased even if the second and subsequent fuel additions are executed.

When the logical AND of the logical OR of the conditions (a) and (b) and the logical OR of the conditions (a') and (b') is true, the ECU 70 sets the upper limit value α to a value UV for the second and subsequent fuel additions. The value UV for the second and subsequent fuel additions is greater than the value IV for the initial fuel addition, so that the amount of added fuel is increased in the second and subsequent fuel additions. Further, the ECU 70 turns the initial addition determination flag ON.

On the other hand, if the initial addition determination flag is not OFF at step 230 or if step 260 is finished, the ECU 70 proceeds to step 270. At step 270, the ECU 70 judges whether the counter value is zero. If the counter value is zero, the ECU 70 turns the addition suspension flag to OFF (t4, t6, t8 in Fig. 2). That is, according to steps 230 to 280, the addition suspension flag is turned OFF when the counter value is zero and the counter value starts being incremented. In contrast to this, in the initial fuel addition control, the addition suspension flag is turned OFF if the counter value is zero and the AND of the OR of the conditions (a) and (b) and the OR of the conditions (a') and (b') is true, and the counter value starts being incremented. Therefore, even after the counter value becomes zero at time t3 as shown in Fig. 2, addition of fuel is not started until time t4 where the requirements of step 250 is satisfied.

On the other hand, if the requirements are not satisfied at step 200, the ECU 70 proceeds to step 290 and turns the initial addition determination flag OFF.

When the AND is not true at step 250, when the counter value is not zero at step 270, and when step 280 or step 290 is finished, the series of processes is temporarily suspended.

This embodiment has the following advantages.
(1) When the fuel adding valve 68 intermittently adds fuel to exhaust gas during the S release control, a degree of increase of the detected value of the exhaust temperature due to addition of fuel is monitored after the initial addition of fuel. Based on the results of monitoring, whether the second and subsequent additions of fuel need to be performed. Accordingly, the temperature in the vicinity of the exhaust filter 38 is prevented from being excessively increased.
(2) Increasing the amount of added fuel in the second and subsequent fuel additions compared to that in the initial fuel addition promotes reduction of substances occluded by the exhaust filter 38 and emission of the substances to the downstream side. Also, even if PM exists in the exhaust filter 38 at the time of the initial fuel addition and there is a possibility that the temperature in the vicinity of the exhaust filter 38 will be excessively increased, increase of the temperature of the exhaust filter 38 is limited. Further, by reducing the amount of added fuel in the initial fuel addition, the period from the initial fuel addition to when fuel addition is resumed is shortened.

### (Second Embodiment)

Hereinafter, an exhaust purifying apparatus of an internal combustion engine according to a second embodiment of the present invention will be described. The apparatus of the second embodiment is applied to a diesel engine 2. Mainly, the difference form the first embodiment will be discussed below.

In this embodiment, the amount of added fuel per addition is decreased as the detected values of the first exhaust temperature sensor 44 and the second exhaust temperature sensor 46 are increased. The detected values repeatedly increase and decrease. Specifically, intermittent fuel additions cause the detected values to increase as the amount of added fuel is increased, and temporal suspensions of fuel addition decrease the detected values. Nevertheless, the average value of the fluctuating detected values increases. This is why the above manner of fuel addition is applied. Therefore, as the period in which rich spike is performed by the S release control is extended, the maximum value of the temperature in the vicinity of the exhaust filter 38 is increased. In this embodiment, the above control is executed for avoiding such situations.

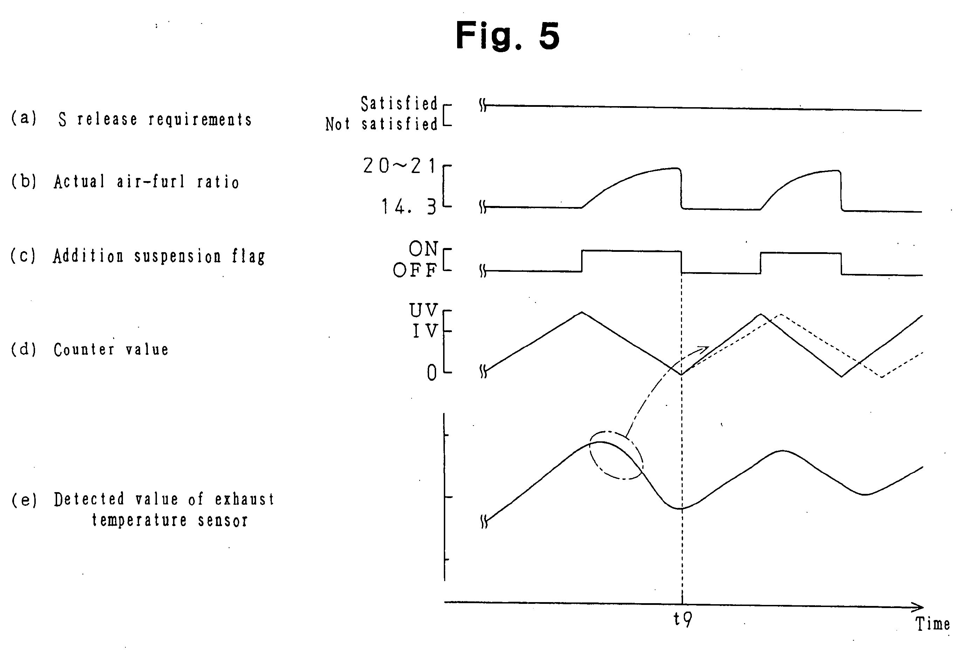

Specifically, the procedure shown in Fig. 5 is executed. Sections (a) to (e) of Fig. 5 correspond to sections (a) to (e) of fig. 2, respectively. In this embodiment, as the maximum values of the detected values of the first exhaust temperature sensor 44 and the second exhaust temperature sensor 46 increase, the rate at which the counter value is incremented is increased as shown in Fig 5. Fig. 5 shows an example in which the rate of increment is increased when increment is started anew at time t9. Accordingly, the amount of added fuel per addition is decreased as the detected values of the first exhaust temperature sensor 44 and the second exhaust temperature sensor 46 are increased.

Accordingly, by decreasing the amount of added fuel per addition as the detected values of the first exhaust temperature sensor 44 and the second exhaust temperature sensor 46 are increased, the detected values are readily prevented from being increased. Further, such a control reduces the fluctuations of the detected values compared to a case where the period between fuel additions is extended as the detected values increase.

The second embodiment as described above has the following advantages.
(3) By decreasing the amount of added fuel per addition as the detected values of the first exhaust temperature sensor 44 and the second exhaust temperature sensor 46 are increased, the detected values are readily prevented from being increased. Further, such a control reduces the fluctuations of the detected values compared to a case where the period between fuel additions is extended as the detected values increase.

### (Third Embodiment)

Hereinafter, an exhaust purifying apparatus of an internal combustion engine according to a third embodiment of the present invention will be described. The apparatus of the third embodiment is applied to a diesel engine. Mainly, the difference form the second embodiment will be discussed below.

In this embodiment, even if the requirements at step 100 of Fig. 3 or at step 200 of Fig. 4 are satisfied, rich spike is temporarily prohibited if the following requirements are not satisfied.
(iv) The detected value of the first exhaust temperature sensor 44 is less than an upper limit value set according to a map that is defined according to the operation state of the diesel engine 2. The upper limit value is, for example, a value at which the temperature in the vicinity of the exhaust filter 38 is not increased by rich spike to a level that degrades the purifying performance of the exhaust filter 38.
(v) The detected value of the second exhaust temperature sensor 46 is less than a predetermined temperature (for example, 660°C). The predetermined temperature is, for example, a value at which the temperature in the vicinity of the exhaust filter 38 is not increased by rich spike to a level that degrades the purifying performance of the exhaust filter 38.

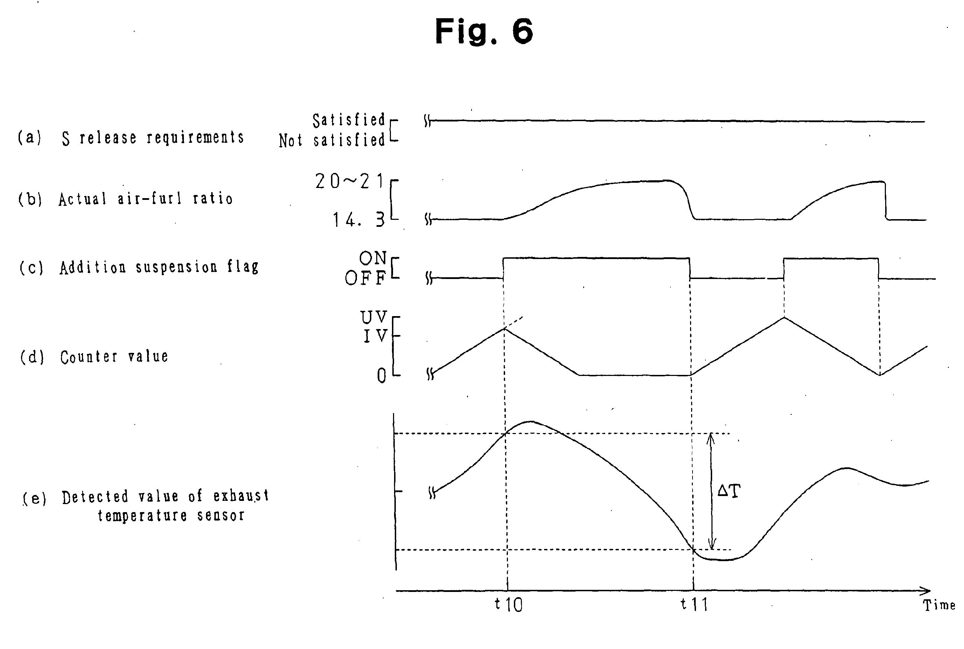

Such temporal prohibition of rich spike and the accompanying processes are shown in Fig. 6. Sections (a) to (e) of Fig. 6 correspond to sections (a) to (e) of fig. 2, respectively. As shown in Fig. 6, when the requirements (4) and (5) are not satisfied at time t10, rich spike is prohibited until time t11, at which the detected value is decreased by a value no less than a predetermined amount ΔT. The predetermined amount ΔT is set to a value at which resumption of rich spike does not excessively increase the detected values.

Further, in the third embodiment, when addition of fuel is prohibited, increment of the counter value of the counter is prohibited, and the counter value is decremented to the initial value. That is, when rich spike is prohibited at time t10 of Fig. 5, the counter value starts being decremented (regardless of the value of the counter value). When the counter value becomes zero, the counter value waits to be incremented. Accordingly, at time t11, or when the detected value ΔT has decreased by the predetermined amount T, rich spike is readily resumed.

In contrast to this, if the counter operates normally when fuel addition is prohibited, the count value may be being decremented at time t11. In such a case, when prohibition of the fuel addition is lifted, it may be impossible to resume the fuel addition.

The third embodiment has the following advantages.
(4) When the detected values of the exhaust temperature sensors surpass the predetermined value, rich spike is prohibited until the detected values are decreased by the predetermined amount ΔT. Accordingly, the temperature in the vicinity of the exhaust filter 38 is prevented from being excessively increased.
(5) When addition of fuel is prohibited, increment of the counter value of the counter is prohibited, and the counter value is decremented to the initial value. Accordingly, when the detected values have decreased by the predetermined amount ΔT, rich spike is readily resumed.

### (Other Embodiments)

The above embodiments may be modified as follows.

The advantage (1) of the first embodiment can be obtained even if the amount of added fuel in the second and subsequent fuel additions is not increased compared to that in the initial fuel addition.

The advantages (4) and (5) can be obtained even if the amount of added fuel per addition is not decreased as the detected values of the first exhaust temperature sensor 44 and the second exhaust temperature sensor 46 are increased.

The advantage (4) of the third embodiment can be obtained even if increment of the counter value of the counter is not prohibited, and the counter value is not decremented to the initial value when addition of fuel is prohibited.

In the third embodiment, increment of the counter value of the counter may be prohibited and the counter value may be decremented to the initial value in a state other than the state where the requirement (iv) or (v) is not satisfied.

When intermittently performing fuel addition, the amount of fuel addition per addition is decreased as the detected values of the exhaust temperature are increased in the above embodiment. However, the amount of fuel addition may be decreased in a different manner. For example, the upper limit value α may be decreased.

In the above embodiment, when the degree of increase of the detected values of the exhaust temperature due to starting of fuel addition is equal to or less than the threshold value while the fuel addition is intermittently performed, the amount of added fuel per addition is increased by changing the upper limit value α. However, the amount of added fuel may be changed in a different manner. For example, the amount of added fuel per addition may be increased by changing the rate of increment.

The fuel addition may be intermittently performed in a manner other than the one that uses the counter.

The method for temporarily stopping fuel addition after it is started, monitoring the degree of increase of the detected value of the exhaust temperature caused by the fuel addition, and resuming the fuel addition based on the results of the monitoring, is not limited to the one in which the degree of increase of the detected value of the exhaust temperature is monitored after the initial fuel addition. For example, the degree of increase of the detected values may be monitored after each of fuel additions.

The method for reducing sulfur oxide occluded by the exhaust filter 38, and adding fuel to a section upstream of the exhaust filter 38 thereby emitting the sulfur oxide to the downstream side of the engine is not limited to the one in which fuel addition is intermittently performed. Even in this case, it is effective to temporarily stop fuel addition after it is started, monitor the degree of increase of the detected values of the exhaust temperature caused by the fuel addition, and resume the fuel addition based on the results of the monitoring. Further, it is not limited to the method in which fuel addition is temporarily stopped after the fuel addition is started. In other words, any method may be adopted as long as, when sulfur oxide occluded by the exhaust filter 38 is reduced and fuel is added to a section upstream of the exhaust filter 38 to emit the reduced substance to the downstream side of the engine, the degree of increase of the exhaust temperature due to starting of the fuel addition is monitored and the manner of fuel addition is adjusted based on the monitoring results.

As the reducing agent, which is supplied to a section upstream of the storage reduction catalyst to reduce substances occluded by the storage reduction catalyst and emit the reduced substances to the downstream side of the engine, material other than fuel added to exhaust gas from the fuel adding valve 68 may be used.

As the degree of increase of the temperature of the exhaust system due to starting of supply of the reducing agent, values other than the detected values of the first exhaust temperature sensor 44 and the second exhaust temperature sensor 46 may be used. For example, the bed temperature of the exhaust filter 38, which is the temperature of the exhaust filter 38 and a bed on which the exhaust filter 38 is provided, may be used.

As the exhaust purifying apparatus having the NOx storage reduction catalyst and the filter for trapping particulate matter in exhaust gas, an apparatus having no the exhaust filter 38 on which the NOx storage reduction catalyst is coated may be used.

The present invention is effectively applied to an exhaust purifying apparatus that has no filter for trapping particulate matter in exhaust gas. This is because, if PM collects in the vicinity of a NOx storage reduction catalyst, the temperature of the exhaust system can be excessively increased by combustion of PM during S release control of the NOx storage reduction catalyst.

As the storage reduction catalyst that occludes substances in exhaust gas when the air-fuel ratio of the exhaust gas is relatively lean, and reduces and emits the substances when the air-fuel ratio is relatively rich, a catalyst other than NOx storage reduction catalyst may be used.

Substance other than sulfur oxide may be occluded by the storage reduction catalyst and emitted to the downstream side of the engine by the reducing agent.

## Claims

1. An exhaust purifying apparatus of an internal combustion engine (2) having a storage reduction catalyst (36) that occludes substances in exhaust gas when the air-fuel ratio of exhaust gas is relatively lean, and reduces and emits the substances when the air-fuel ratio is relatively rich, the apparatus being **characterized in that**, after starting to supply reducing agent from a section upstream of the storage reduction catalyst (36) to reduce the poisoning substance occluded by the storage reduction catalyst (36) and to discharge the substance from the storage reduction catalyst (36), the apparatus temporarily stops supplying the reducing agent after an initial addition of the reducing agent and monitors a degree of increase in the temperature of an exhaust gas due to the start of supplying the reducing agent, wherein, based on the monitoring result, when it is determined that there is no possibility that the temperature of the exhaust gas will be excessively increased, the apparatus resumes supplying the reducing agent.

2. The exhaust purifying apparatus of an internal combustion engine (2) according to claim 1 **characterized in that**, based on the monitoring result, the apparatus sets up the manner in which the reducing agent is supplied subsequently.

3. The exhaust purifying apparatus of an internal combustion engine (2) according to claim 1 or 2, **characterized in that** the supply of reducing agent is performed intermittently, and wherein, when the degree of increase in the temperature of the exhaust gas due to the start of supplying the reducing agent is no more than a predetermined threshold value, the apparatus increases the amount of supplied reducing agent in each supply.

4. The exhaust purifying apparatus of an internal combustion engine (2) according to any one of the claims 1 to 3, **characterized in that** the supply of reducing agent is performed intermittently, and wherein, when the temperature of the exhaust gas increases, the apparatus decreases the amount of supplied reducing agent in each supply.

5. The exhaust purifying apparatus of an internal combustion engine (2) according to any one of claims 1 to 4, **characterized in that**, when the temperature of the exhaust system surpasses a predetermined temperature due to the supply of the reducing agent, the apparatus prohibits the supply of the reducing agent until the temperature of the exhaust gas decreases by an amount no less than a predetermined amount.

6. The exhaust purifying apparatus of an internal combustion engine (2) according to any one of claims 1 to 5, **characterized in that** the supply of the reducing agent is performed when a count value of a counter that is periodically and repeatedly incremented and decremented is incremented, and wherein, when the supply of the reducing agent is prohibited, the apparatus prohibits the count value of the counter from being incremented and decrements the count value to an initial value.

7. The exhaust purifying apparatus of an internal combustion engine (2) according to any one of claims 1 to 6, **characterized in that** the substances, which are occluded by the storage reduction catalyst (36) and emitted from the engine (2) by the supply of the reducing agent, are sulfur oxides.

8. The exhaust purifying apparatus of an internal combustion engine (2) according to any one of claims 1 to 7, **characterized by** further comprising a filter (3 8) for trapping particulate matter in the exhaust gas disposed at a downstream side of the storage reduction catalyst (36).

9. The exhaust purifying apparatus of an internal combustion engine (2) according to any one of claims 1 to 8, **characterized in that** the supply of reducing agent is performed intermittently, and wherein, after starting to supply the reducing agent, the apparatus increases the amount of the supplied reducing agent in the second and subsequent supplies compared to the amount of the supplied reducing agent in the initial supply.

## Patentansprüche

1. Abgasreinigungsvorrichtung für einen Verbrennungsmotor (2) mit einem Speicherreduktionskatalysator (36), der Substanzen im Abgas festhält, wenn das Luft/Kraftstoff Verhältnis des Abgases relativ mager ist, und die Substanzen reduziert und emittiert, wenn das Luft/Kraftstoff Verhältnis relativ fett ist, wobei die Vorrichtung **dadurch gekennzeichnet ist, dass** sie, nachdem sie damit begonnen hat, Reduktionsmittel aus einem Bereich stromaufwärts vom Speicherreduzierungskatalysator (36) zu liefern, um die vergiftende Substanz, die vom Speicherreduktionskatalysator (36) festgehalten wird, zu reduzieren und die Substanz vom Speicherreduktionskatalysator (36) auszutragen, nach anfänglicher Zugabe des Reduktionsmittels die Reduktionsmittelzufuhr unterbricht und den Umfang einer Temperaturerhöhung des Abgases aufgrund des Beginns der Reduktionsmittelzufuhr überwacht, wobei die Vorrichtung aufgrund des Überwachungsergebnisses die Reduktionsmittelzufuhr wieder aufnimmt, wenn bestimmt wird, dass keine Gefahr besteht, dass die Temperatur des Abgases zu stark erhöht wird.

2. Abgasreinigungsvorrichtung für einen Verbrennungsmotor (2) nach Anspruch 1, **dadurch gekennzeichnet, dass** die Vorrichtung aufgrund des Überwachungsergebnisses die Art und Weise, wie das Reduktionsmittel anschließend zugeführt wird, einrichtet.

3. Abgasreinigungsvorrichtung für einen Verbrennungsmotor (2) nach einem der Ansprüche 1 oder 2, **dadurch gekennzeichnet, dass** die Zufuhr an Reduktionsmittel intermittierend durchgeführt wird, und wobei, wenn der Grad der Temperaturerhöhung des Abgases aufgrund des Beginns der Zufuhr von Reduktionsmittel nicht über einem vorgegebenen Schwellenwert liegt, die Vorrichtung die Menge an zugeführtem Reduktionsmittel in jeder Zufuhr erhöht.

4. Abgasreinigungsvorrichtung für einen Verbrennungsmotor (2) nach einem der Ansprüche 1 bis 3, **dadurch gekennzeichnet, dass** die Zufuhr an Reduktionsmittel intermittierend durchgeführt wird, und wobei die Vorrichtung, wenn die Temperatur des Abgases steigt, die Menge an zugeführtem Reduktionsmittel pro Zufuhr senkt.

5. Abgasreinigungsvorrichtung für einen Verbrennungsmotor (2) nach einem der Ansprüche 1 bis 4, **dadurch gekennzeichnet, dass** die Vorrichtung, wenn die Temperatur des Abgassystems wegen der Reduktionsmittelzufuhr eine vorgegebene Temperatur überschreitet, die Reduktionsmittelzufuhr verhindert, bis die Temperatur des Abgases um einen Betrag sinkt, der nicht unter einem vorgegebenen Betrag liegt.

6. Abgasreinigungsvorrichtung für einen Verbrennungsmotor (2) nach einem der Ansprüche 1 bis 5, **dadurch gekennzeichnet, dass** die Reduktionsmittelzufuhr durchgeführt wird, wenn ein Zählerwert, der periodisch und wiederholt inkrementiert und dekrementiert wird, inkrementiert wird, und wobei, wenn die Reduktionsmittelzufuhr verhindert wird, die Vorrichtung verhindert, dass der Zählerwert des Zählers inkrementiert wird, und den Zählerwert auf einen Anfangswert dekrementiert.

7. Abgasreinigungsvorrichtung für einen Verbrennungsmotor (2) nach einem der Ansprüche 1 bis 6, **dadurch gekennzeichnet, dass** die Substanzen, die von dem Speicherreduzierungskatalysator (36) festgehalten werden und durch die Zufuhr des Reduktionsmittels aus dem Motor (2) emittiert werden, Schwefeloxide sind.

8. Abgasreinigungsvorrichtung für einen Verbrennungsmotor (2) nach einem der Ansprüche 1 bis 7, **dadurch gekennzeichnet, dass** sie ferner ein Filter (38) zum Einfangen von teilchenförmigem Material im Abgas einschließt, das auf der Seite stromabwärts vom Speicherreduzierungskatalysator (36) angeordnet ist.

9. Abgasreinigungsvorrichtung für einen Verbrennungsmotor (2) nach einem der Ansprüche 1 bis 8, **dadurch gekennzeichnet, dass** die Zufuhr an Reduktionsmittel intermittierend durchgeführt wird, und wobei die Vorrichtung nach dem Beginn der Reduktionsmittelzufuhr die Menge an zugeführtem Reduktionsmittel ab der zweiten Zufuhr im Vergleich zur Menge des zugeführten Reduktionsmittels in der ersten Zufuhr erhöht.

## Revendications

1. Appareil de purification des gaz d'échappement d'un moteur à combustion interne (2) comportant un catalyseur de stockage et de réduction (36) qui occlut des substances dans les gaz d'échappement lorsque le rapport air/carburant des gaz d'échappement est relativement pauvre, et réduit et émet les substances lorsque le rapport air/carburant est relativement riche, l'appareil étant **caractérisé en ce que**, après avoir lancé l'alimentation en agent de réduction depuis une section en amont du catalyseur de stockage et de réduction (36) pour réduire la substance d'empoisonnement occluse par le catalyseur de stockage et de réduction (36) et évacuer la substance du catalyseur de stockage et de réduction (36), l'appareil arrête temporairement l'alimentation en agent de réduction après un ajout initial de l'agent de réduction et contrôle un degré d'augmentation de la température des gaz d'échappement en raison du début de l'alimentation en agent de réduction, dans lequel, sur la base du résultat du contrôle, lorsqu'il est déterminé qu'il n'existe pas de possibilité que la température des gaz d'échappement soit élevée de manière excessive, l'appareil reprend l'alimentation en agent de réduction.

2. Appareil de purification des gaz d'échappement d'un moteur à combustion interne (2) selon la revendication 1, **caractérisé en ce que**, sur la base du résultat de contrôle, l'appareil établit la manière selon laquelle l'agent de réduction est délivré par la suite.

3. Appareil de purification des gaz d'échappement d'un moteur à combustion interne (2) selon la revendication 1 ou 2, **caractérisé en ce que** l'alimentation en agent de réduction est réalisée de manière intermittente, et dans lequel, lorsque le degré d'augmentation de la température des gaz d'échappement en raison du début de l'alimentation en agent de réduction n'est pas supérieur à une valeur de seuil prédéterminée, l'appareil augmente la quantité d'agent de réduction délivré lors de chaque alimentation.

4. Appareil de purification des gaz d'échappement d'un moteur à combustion interne (2) selon l'une quelconque des revendications 1 à 3, **caractérisé en ce que** l'alimentation en agent de réduction est réalisée de manière intermittente, et dans lequel, lorsque la température des gaz d'échappement augmente, l'appareil diminue la quantité d'agent de réduction délivré lors de chaque alimentation.

5. Appareil de purification des gaz d'échappement d'un moteur à combustion interne (2) selon l'une quelconque des revendications 1 à 4, **caractérisé en ce que**, lorsque la température du système d'échappement dépasse une température prédéterminée en raison de l'alimentation en agent de réduction, l'appareil interdit l'alimentation en agent de réduction jusqu'à ce que la température des gaz d'échappement diminue d'une quantité n'étant pas inférieure à une quantité prédéterminée.

6. Appareil de purification des gaz d'échappement d'un moteur à combustion interne (2) selon l'une quelconque des revendications 1 à 5, **caractérisé en ce que** l'alimentation en agent de réduction est réalisée lorsqu'une valeur de compte d'un compteur qui est périodiquement et de manière répétée incrémentée et décrémentée est incrémentée, et dans lequel lorsque l'alimentation en agent de réduction est interdite, l'appareil interdit à la valeur de compte du compteur d'être incrémentée et décrémente la valeur de compte à une valeur initiale.

7. Appareil de purification des gaz d'échappement d'un moteur à combustion interne (2) selon l'une quelconque des revendications 1 à 6, **caractérisé en ce que** les substances, qui sont occluses par le catalyseur de stockage et de réduction (36) et émises depuis le moteur (2) par l'alimentation en agent de réduction, sont des oxydes de soufre.

8. Appareil de purification des gaz d'échappement d'un moteur à combustion interne (2) selon l'une quelconque des revendications 1 à 7, **caractérisé en ce qu'**il comprend de plus un filtre (38) destiné à piéger les matières particulaires dans les gaz d'échappement disposé au niveau d'un côté aval du catalyseur de stockage et de réduction (36).

9. Appareil de purification des gaz d'échappement d'un moteur à combustion interne (2) selon l'une quelconque des revendications 1 à 8, **caractérisé en ce que** l'alimentation en agent de réduction est réalisée de manière intermittente, et dans lequel, après avoir lancé l'alimentation en agent de réduction, l'appareil augmente la quantité d'agent de réduction délivré lors du deuxième ajout et des ajouts suivants en comparaison avec la quantité d'agent de réduction délivré lors de l'ajout initial.
